# EUROPEAN PATENT SPECIFICATION

(11) **EP 0 742 321 B1**
(45) Date of publication and mention of the grant of the patent: **03.12.2003**
(21) Application number: 96105838.5
(22) Date of filing: 13.04.1996
(51) Int. Cl.: E02D 31/00

(54) **Low permeability geosynthetic clay liner and method of manufacture thereof**
Tonartige geosynthetische Matte mit niedriger Durchlässigkeit und Herstellungsverfahren derselben
Membrane géosynthétique de faible perméabilité à base d'argile et sa méthode de fabrication

(30) Priority: 08.05.1995 US 436540; 08.04.1996 US 624150
(43) Date of publication of application: 13.11.1996
(73) Proprietor: AMCOL INTERNATIONAL CORPORATION, Arlington Heights, Illinois 60004 (US)
(72) Inventor: Carriker, Richard W., Crystal Lake, Illinois 60014 (US); Fuller, John M., Dunwoody, Georgia 30338 (US)
(74) Representative: Brose, D. Karl

(56) References cited:
- EP-A- 0 381 342
- EP-A- 0 449 182
- EP-A- 0 522 481
- EP-A- 0 563 453
- EP-A- 0 620 325
- EP-A- 0 671 510

## Description

This invention relates generally to flexible geosynthetic clay liners for use in creating low permeability bottom layers or barriers in waste containment sites, man-made bodies of water and other applications where a low permeability flexible barrier is required. More specifically, the invention relates to a geosynthetic clay liner comprising a flexible primary carrier sheet, a layer of bentonite clay disposed on the top of the primary carrier sheet and a flexible intermediate layer disposed on top of the layer of bentonite clay, wherein a flexible cover sheet is disposed on top of the flexible intermediate layer.

A geosynthetic clay liner of this kind is generally known from EP-A-449 182. In this known geosynthetic liner the flexible intermediate layer is consisting of an adhesive and has a very low thickness, wherein as an example a film with a thickness comprised between 0,1 and 0,2 mm is given in this document. The adhesive must set into both the supporting layer and the bentonite layer to achieve the desired effect to retain and hold a layer of bentonite granules on the supporting layer.

A further geosynthetic clay liner is known from EP-A-522 481, in which the liner is comprising a supporting layer and a covering layer consisting of a geo-gauze, wherein between these two layers there are provided to identical layers of bentonite separated by an intermediate layer. In this case, the intermediate layer serves as a support and has high mechanical strength characteristics to make the liner selfsupporting and to prevent its collapse in case of installation on vertical or almost vertical walls with slopes of more than 45°. For this purpose the intermediate layer is preferably made of flock-like geocompatible textile material with high inhibition power.

From the EP-A-381 342 it is further known, to use for the bentonite layer in a geosynthetic liner consisting of a supporting sheet and said bentonite layer a mixture of bentonite with an additive which provides an excess of single-charged cations, which tend to neutralise the deleterious effects of double-charged cations, which are naturally present in seawater and in industrial waste.

The concept of using flexible geosynthetic clay liners (GCLs) for creating a low permeability layer or barrier for use in landfills and man-made bodies of water is well known. While flexible GCLs made with bentonite provide an effective barrier, users of such GCLs often complain that the GCLs are not effective enough, i.e. the GCLs do not provide sufficiently low permeabilities under certain circumstances, such as landfill caps and deep ponds, because of low confining stresses that can practically be applied to the GCL as a result of soil cover thickness limitations.

For example, many state regulations and project specifications require that the drainage out of a man-made pond be less than 1893 l (500 gallons) per day per 4047 m² (per acre) of pond. This requirement is problematic for deep ponds where the height of the water level is greater than 91,44 cm (3 feet). In practice, the drainage out of deep ponds lined with conventional GCLs generally exceeds several thousand gallons per day per acre of pond because current GCLs have permeabilities ranging from 5 x 10⁻⁹ cm/sec to 1 x 10⁻⁷ cm/sec . Further, typical GCLs are relatively thin having a typical thickness of 17,78 mm (0,7").

Starting out from a geosynthetic liner of the above identified kind, the invention has for its task to provide a bentonite geosynthetic clay liner with an improved permeability, which means that the liner has a predetermined permeability which is decided or determined by the permeability of the materials used for constructing the liner. The resulting GCL would be an ultra low permeability GCL used to provide an effective barrier against the transmission of liquids (i.e. with permeabilities less than about 5 x 10⁻¹⁰ cm/sec., preferably less than about 1 x 10⁻¹⁰ cm/sec.).

The present invention makes a significant contribution to the flexible geosynthetic clay liner art by providing a liner with improved low permeability characteristics by incorporating a low permeability sheet or layer within the body of the geosynthetic clay liner. Shortly the geosynthetic clay liner is consisting of two flexible textile sheets with at least one flexible layer of bentonite and a low permeability flexible layer of polymeric sheet material disposed therebetween. Specifically reviewing the construction of the GCL of the present invention from bottom to top, the GCL includes a flexible primary carrier sheet with a first flexible layer of bentonite disposed on top of the primary carrier sheet. A middle or intermediate flexible layer of polymeric sheet material or fabric is disposed on top of the first layer of bentonite and an optional second flexible layer of bentonite is disposed on top of the middle or intermediate layer. Finally, a top flexible cover sheet is disposed on top of the second layer of bentonite.

In the alternative, the middle or intermediate flexible layer of polymeric sheet material or fabric may be disposed adjacent to the cover sheet or with only a single layer of bentonite disposed between the intermediate layer and the primary carrier sheet. Also, the intermediate layer may be disposed adjacent to the primary carrier sheet with only a single layer of bentonite disposed between the intermediate layer and the cover sheet.

The intermediate flexible layer can provide improved low permeability characteristics. Specifically, if the intermediate layer is in the form of a sheet, the intermediate sheet may be fabricated from a flexible sheet of plastic material that will not permit the migration of any substantial amounts of liquid.

The intermediate layer may also be provided in the form of a flexible coating of a polymer over the first bentonite layer i.e. the sheet material is formed in situ. Again, an optional second flexible bentonite layer may be disposed on top of the coating of polymer material.

Further, the low permeability characteristics of the present invention may be enhanced by constructing the GCL with a high swelling low permeability and/or chemically altered bentonite clay.

The structural stability of the GCL of the present invention may also be enhanced by using an intermediate flexible sheet of a corrugated or wave-like configuration. The intermediate layer may also be altered chemically or mechanically in a way to enhance the adherence of the bentonite to the intermediate layer. If the sheet material of intermediate layer is produced in situ in the form of a polymer that is sprayed on or otherwise applied to the first layer of bentonite, the polymer may be chosen so it attains a relatively rigid structure after it dries, while maintaining flexibility to the overall GCL, so it can contribute to the structural stability of the flexible GCL as well.

It will be noted that the bottom flexible sheet that engages the ground is generally known as the primary carrier sheet and that the top sheet on which landfill material is deposited is generally known as the cover sheet. These materials must be flexible to allow the GCL to bend in correspondence to the contours and shapes of the surface that it covers. However, it will also be noted that the primary carrier sheet and cover sheet may be made of identical fabric thereby enabling either the top or bottom sheet to face downward. In any event, this invention is not limited to a specific primary carrier sheet material or any specific top cover sheet material.

The present invention also lends itself to an improved method of manufacturing an improved flexible GCL, as defined by claim 14. The first layer of bentonite, in a granular form, powdered form, or mixtures, is disposed on top of either a primary flexible carrier sheet or flexible cover sheet. An intermediate layer of flexible sheet material, in one embodiment, is disposed on top of the first layer of bentonite. An optional second flexible layer of bentonite is disposed on top of the intermediate sheet material layer before either the cover sheet or the primary carrier sheet is disposed on top of the second layer of bentonite to complete the sandwich-type construction of the flexible GCL. Then, the GCL can be held together in a variety of methods including glueing, sewing or needle-punching. Glue can be applied to the inside-facing surfaces of the primary and cover sheets as well as the intermediate sheet or layer during construction. Glue may also be applied to the layers of bentonite.

Other objects and advantages of the present invention will become apparent upon reading the following detailed description of the drawings and appended claims, and upon reference to the accompanying drawings.

The invention is illustrated more or less diagrammatically in the accompanying drawings wherein:
**Fig. 1** is a sectional view of a flexible geosynthetic clay liner made in accordance with the present invention;
**Fig. 2** is a sectional view of another flexible geosynthetic clay liner made in accordance with the present invention;
**Fig. 3** is a schematic illustration of one method of fabricating a deformed intermediate sheet to be used in flexible geosynthetic clay liners made in accordance with the present invention;
**Fig. 4** is a schematic illustration of on method of manufacturing a flexible geosynthetic clay liner in accordance with the present invention;
**Fig. 5** is a schematic illustration of another method of fabricating a flexible geosynthetic clay liner in accordance with the present invention; and
**Fig. 6** is a schematic illustration of another preferred embodiment of manufacturing the flexible geosynthetic clay liner in accordance with the present invention wherein an intermediate sheet material layer is permanently adhered directly or the primary carrier sheet, e.g., with glue, or pre-adhered as received from a supplier, prior to adding a layer of bentonite clay and then the cover layer.

It should be understood that the drawings are not necessarily to scale and that the embodiments are sometimes illustrated by diagrammatic representations and fragmentary views. In certain instances, details which are not necessary for an understanding of the present invention or which render other details difficult to perceive may have been omitted. It should be understood, of course, that the invention is not necessarily limited to the particular embodiments illustrated herein.

Like reference numerals will be used to refer to like or similar parts from Figure to Figure in the following description of the drawings.

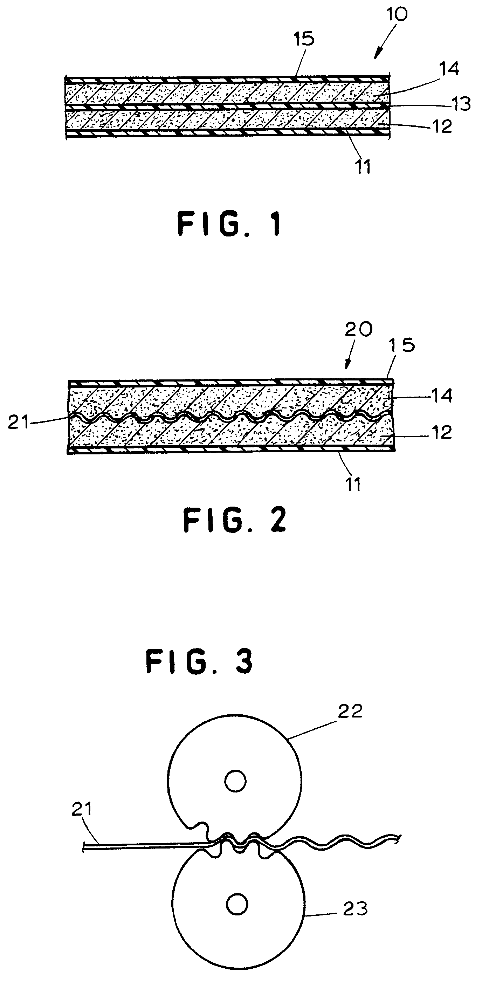

A sectional view of a flexible GCL made in accordance with the present invention is illustrated in Figure 1. Specifically, the flexible GCL 10 of the present invention includes a flexible primary carrier sheet 11, a first flexible layer 12 of bentonite, in powdered or granular form, preferably in granular form, a flexible intermediate sheet or layer 13, a second flexible layer 14 of bentonite, again preferably in granular form, a and a flexible cover sheet 15. Again, it will be noted that the cover sheet 15 and primary carrier sheet 11 may very well be interchangeable. The intermediate layer or sheet 13 as shown in Figure 1 has the ability to dramatically decrease the effective permeability of the GCL 10. In effect, the GCL 10 as shown in Figure 1 can be an ultra low permeability flexible GCL if the flexible intermediate sheet or layer 13 is fabricated form a ultra low permeability material, such as many plastics that are known in the art. The intermediate layer 13 may also be altered chemically or mechanically to enhance the adherence of the bentonite layer 12, 14 to the intermediate layer 13.

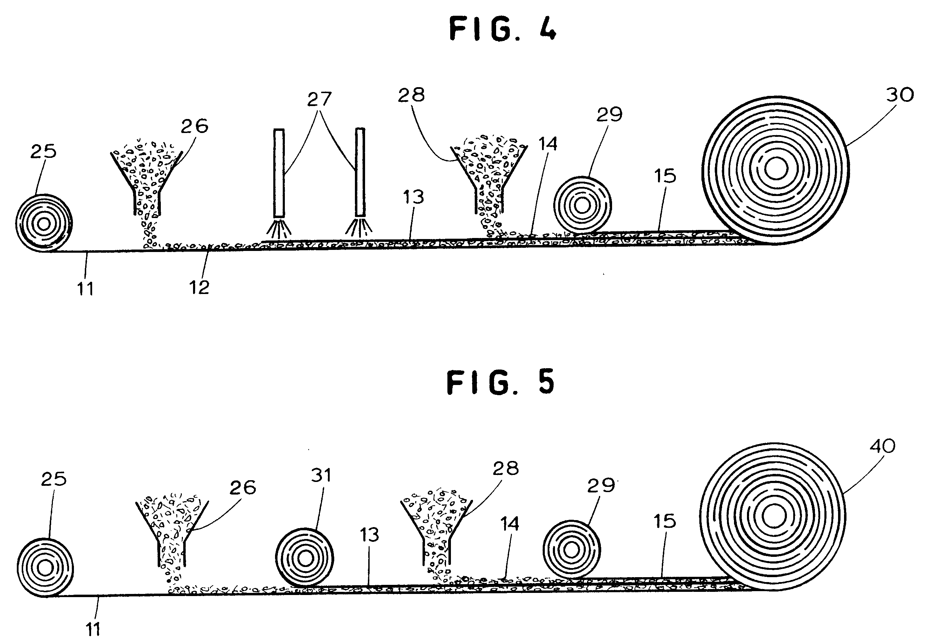

The intermediate sheet or layer 13 maybe simply disposed on top of the first layer of bentonite as shown below in Figure 5. However, if the intermediate layer 13 is formed in situ by a layer of polymer material which is sprayed or.otherwise applied in liquid or molten form onto the first bentonite layer 12, the intermediate layer 13 is then applied in accordance with the process shown in Figure 4.

An additional improvement is illustrated by the GCL 20 shown in Figure 2. Again, the GCL 20 includes a carrier sheet 11, a first layer of bentonite 12, a second layer of bentonite 14 and cover sheet 15. However, the GCL 20 includes a flexible rippled or corrugated intermediate sheet of layer 21 which enhances the structural stability of the GCL 20 because the bentonite layers 12, 14 become very slippery when exposed to water. By providing a flexible intermediate sheet or layer, particularly a flexible layer 21, with ripples, corrugations or other alterations which may be mechanical or chemical in nature, a higher frictional surface may be provided to deter or retard slippage between the bentonite clay layers 12, 14 and the intermediate sheet 21. Chemical or mechanical alterations of the intermediate layer 21 may be used to enhance the adherence of the bentonite layers 12, 14 to the intermediate layer 21. The result is a flexible GCL 20 with the improved permeability characteristics discussed above with respect to the GCL 10 and also with an improved structural stability.

In addition, specific grades or types of bentonite may be selected to enhance the low permeability characteristics of the GCLs 10, 20. A high swelling, low permeability or chemically altered bentonite clay may be selected. One particularly preferable type of clay is western bentonite. The layers of bentonite 12, 14 are applied in amounts approximating 2,44 kg per m² (one-half pound per square foot) but do not have to be applied in equal amounts. Amounts in each layer may vary between zero and 9,77 kg/m² (zero and 2 pounds per square foot).

Typically, a GCL without an intermediate sheet 13 or 21 will have an overall effective permeability from 1 x 10⁻⁷ cm/sec to 5 x 10⁻⁹ cm/sec, depending in the confining stress applied to the GCL. The incorporation of an intermediate sheet or layer such as 13, 21 will provide a flexible GCL with an effective permeability of at least as low as 5 x 10⁻¹⁰ cm/sec, preferably a permeability of 1 x 10⁻¹⁰ cm/sec or less, and more preferably a permeability of approximately 5 x 10⁻¹¹ cm/sec or less at low confining stresses, thereby providing a substantial improvement.

The intermediate flexible sheet may be fabricated form polyvinylchloride, polyethylene, polypropylene, nylon or other polymeric compounds. Such materials normally weigh between 0,17 and 0,84 kg/m² (0,5 to 25 ounces per square yard).

Figure 3 is an illustration of one method of providing a flexible corrugated or rippled intermediate sheet 21. The sheet 21 is fed between an upper 22 and lower 23 embossing roller to provide the ripple or corrugated effect.

Improved methods of manufacturing low permeability flexible GCLs 30 and 40 are illustrated in Figures 4 and 5, respectively. Briefly, the flexible carrier sheet 11 is unrolled from the roll 25. The first layer of bentonite 12 is deposited on the carrier 11 as it passes under the hopper 26. The intermediate flexible layer 13 may be applied via one or more spray nozzles or other methods of applying a liquid or molten material shown generally at 27 before the second layer of bentonite 14 is deposited on top of the intermediate layer 13 as the partially-fabricated GCL passes under the hopper 28. Finally, the top flexible carrier 15 is deposited on top of the second layer of bentonite 14 as the GCL passes underneath the roll 29.

The method illustrated in Figure 5 employs the same steps except that the intermediate sheet 13 is provided by the roll 31 as opposed to the nozzles 27 as shown in Figure 4.

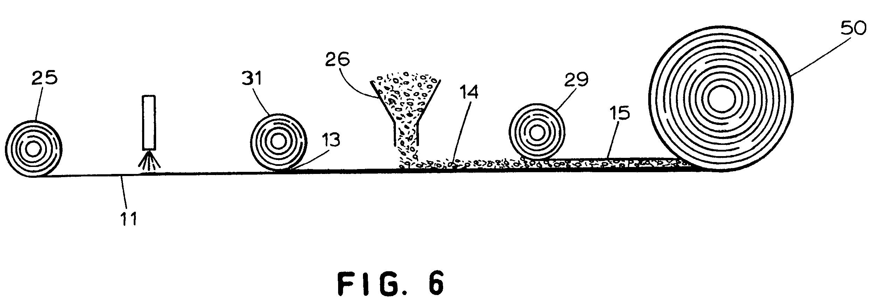

In accordance with another preferred embodiment of the present invention, shown in Figure 6, the intermediate flexible sheet material layer 13, preferably a flexible sheet 13 of polymeric material, e.g., a polyolefin, such as polyethylene or polypropylene, is permanently adhered directly to the inner surface of the flexible carrier layer 11, or directly to an inner surface of the flexible cover sheet 15, for example, using an adhesive from an adhesive spraying on coating device 27, prior to applying the layer 14 of bentonite clay over the intermediate sheet material layer 13 and then overlaying the flexible cover sheet 15 over the bentonite clay layer 14, to form flexible GCL 50. One of the advantages of the GCL construction shown in Figure 6 is that when the GCL 50 is used, for example, on a sloping surface of a landfill cap, disposed such that the textile/adhered sheet of flexible polymeric sheet material layer is on the upper surface, water travelling over the upper fabric surface will not leach bentonite clay out of the GCL 50 (through the upper fabric layer) since the upper fabric layer is lined on its interior surface with a water-impermeable or low permeability polymeric sheet material layer. The polymeric sheet material layer will, therefore, prevent moving water travelling over an upper surface of the GCL from eroding or entraining the bentonite clay out of the upper surface of the article. Similarly, if moving water travels under the GCL 50 of Figure 6, the fabric/adhered polymeric sheet material layer will be disposed downwardly, so that the lower fabric has its inner surface adhered to the polymeric sheet material layer to prevent loss of bentonite clay through the outer surface of the lowermost fabric layer.

It should be understood that while Figure 6 shows the flexible carrier sheet 11 being glued to the polymeric sheet material layer 13 during manufacture, these two layers could be provided in prelaminated form prior to manufacture, to eliminate a manufacturing step. In addition to adhesively affixing the flexible intermediate polymeric sheet material layer 13 to the flexible carrier layer 11 or to the flexible cover layer 15, any other method can be used to permanently adhere the polymeric sheet material layer 13 to the inner surface of the cover layer 15, for example, melt bonding, or spraying a polymeric melt onto the inner fabric surface.

Although only two embodiments of the present invention have been illustrated and described, it will at once be apparent to those skilled in the art that variations may be made within and scope of the invention. Accordingly, it is intended that the scope of the invention be limited solely by the cope of the hereafter appended claims and not by any specific wording in the foregoing description.

## Claims

1. A flexible geosynthetic clay liner (10) comprising a flexible primary carrier sheet (11) and a layer (12) of bentonite clay disposed on top of the primary carrier sheet (11), wherein a flexible intermediate layer (13, 21) is disposed on top of the layer of bentonite clay and a flexible cover sheet (15) is disposed on top of the flexible intermediate layer (13, 21), **characterized in that** the flexible intermediate layer (13, 21) is fabricated from polymeric sheet material of low permeability.

2. The geosynthetic clay liner according to claim 1, **characterized in that** adhesive is applied to an upper surface of the primary carrier sheet (11) to assist in adhering the layer (12, 14) of bentonite clay against the upper surface of the primary carrier sheet (11) and adhesive is applied to a lower surface of the cover sheet (15) to assist in adhering the flexible intermediate layer (13, 21) of polymeric sheet material to the cover sheet (15).

3. The geosynthetic clay liner according to claim 2, **characterized in that** adhesive is applied to the upper and lower surfaces of the intermediate layer (13, 21) to assist in adhering the layer (12, 14) of bentonite clay and the cover sheet (15) to the intermediate layer (13, 21).

4. The geosynthetic clay liner according of any of the preceding claims, **characterized in that** a second layer (14) of bentonite clay is disposed between the intermediate layer (13, 21) and the cover sheet (15).

5. The geosynthetic clay liner according to any of the preceding claims, **characterized in that** an undersurface of the primary carrier sheet (11) has a high friction surface to enhance frictional engagement between the lower surface of the primary carrier sheet (11) and a sloping surface on which the liner (10, 20, 50) is installed.

6. The geosynthetic clay liner according to any of the preceding claims, **characterized in that** the layer (12) of bentonite clay is contained in the clay liner (10, 20, 50) in an amount of about 1,22 to about 9,76 kg (0,25 pounds to about 2 pounds) of bentonite clay per square meter (per square foot).

7. The geosynthetic clay liner according to any of the claims 4 to 6, **characterized in that** the second layer (14) of bentonite clay is contained in the clay liner (10, 20, 50) in an amount of about 1,22 to about 9,76 kg (0,25 pounds to about 2 pounds) of bentonite clay per square meter (per square foot).

8. The geosynthetic clay liner according to any of the preceding claims, **characterized in that** the intermediate layer (21) is having a rippled or corrugated structure.

9. The improved flexible geosynthetic clay liner of claim 1, having a water permeability of less than 5 x 10⁻¹⁰ cm/sec, comprising:
a flexible primary carrier fabric (11);
a flexible intermediate layer (13, 21) of polymeric sheet material secured to the primary carrier fabric (11);
a layer (12) of bentonite clay disposed on top of the intermediate layer (13, 21); and
a flexible cover fabric (15) disposed on top of the layer (12) of bentonite clay.

10. The improved flexible geosynthetic clay liner of claim 4, having a water permeability of less than 5 x 10⁻¹⁰ cm/sec comprising:
a flexible primary carrier sheet (11);
a first layer (12) of bentonite clay disposed on top of the primary carrier sheet (11);
a flexible intermediate layer (13, 21) of polymeric sheet material disposed on top of the first layer (12) of bentonite clay;
a second layer (14) of bentonite clay disposed on top of the intermediate layer (13, 21); and
a flexible cover sheet (15) disposed on top of the layer (14) of bentonite clay.

11. An improved flexible geosynthetic clay liner of claim 1 comprising:
a flexible primary carrier sheet (11);
a layer (12) of bentonite clay disposed on top of the primary carrier sheet (11); and
a fabric (13, 21) lined with a water-impermeable plastic sheet material disposed on top of the layer (12) of bentonite clay, such that the plastic sheet material is in contact with the layer (12) of bentonite clay.

12. The geosynthetic clay liner of claim 9, wherein the intermediate layer (13, 21) of polymeric sheet material is further characterized as being a water-impermeable sheet material layer.

13. The geosynthetic clay liner of claim 10, wherein the intermediate layer (13, 21) of polymeric sheet material is characterized as being a water-impermeable sheet material layer.

14. A method of fabricating the low permeability geosynthetic clay liner of claim 1, the method comprising the following steps:
(a) providing a flexible primary carrier sheet of fabric;
(b) depositing a layer (12) of bentonite clay on top of the primary carrier sheet (11);
(c) depositing an intermediate flexible layer (13, 21) of polymeric sheet material on top of the layer (12) of bentonite clay;
(d) depositing a flexible fabric cover sheet (15) on top of the intermediate flexible layer (13, 21);
(e) attaching the cover sheet (15) to the primary carrier sheet (11) with the layer (12) of bentonite clay and intermediate layer (13, 21) disposed therebetween.

15. The method according to claim 14, **characterized in that** between method steps (c) and (d) a further layer (14) of bentonite clay is deposited on top of the intermediate flexible layer (13, 21).

## Patentansprüche

1. Eine flexible tonartige geosynthetische Matte (10), bestehend aus einer flexiblen primären Tragbahn (11) und einer Schicht (12) aus Bentonit, welche auf der Oberseite der primären Tragbahn (11) angeordnet ist, wobei eine flexible Zwischenschicht (13, 21) oben auf der Bentonitschicht angeordnet ist, und eine flexible Deckbahn (15) auf der Oberseite der flexiblen Zwischenschicht (13, 21) angeordnet ist, **dadurch gekennzeichnet, dass** die flexible Zwischenschicht (13, 21) aus einem polymeren Bahnmaterial niedriger Durchlässigkeit hergestellt ist.

2. Tonartige geosynthetische Matte nach Anspruch 1, **dadurch gekennzeichnet, dass** der Klebstoff auf eine Oberfläche der primären Tragbahn (11) aufgetragen ist, um das Anhaften der Bentonitschicht (12, 14) an der Oberfläche der primären Tragbahn (11) zu unterstützen, und dass Klebstoff auf eine untere Oberfläche der Deckbahn (15) aufgetragen ist, um das Anhaften der flexiblen Zwischenschicht (13, 21) aus polymerem Bahnmaterial an der Deckbahn (15) zu unterstützen.

3. Tonartige geosynthetische Matte nach Anspruch 2, **dadurch gekennzeichnet, dass** Klebstoff auf die obere und untere Oberfläche der Zwischenschicht (13, 21) aufgetragen ist, um das Anhaften der Schicht (12, 14) aus Bentonitton und der Deckbahn (15) an der Zwischenschicht (13, 21) zu unterstützen.

4. Tonartige geosynthetische Matte nach einem der vorstehenden Ansprüche, **dadurch gekennzeichnet, dass** eine zweite Schicht (14) aus Bentonitton zwischen der Zwischenschicht (13, 21) und der Deckbahn (15) angeordnet ist.

5. Tonartige geosynthetische Matte nach einem der vorstehenden Ansprüche, **dadurch gekennzeichnet, dass** eine Unterfläche der primären Tragbahn (11) eine Oberfläche hoher Reibung aufweist, um den reibungsgemäßen Eingriff zwischen der Unterfläche der primären Tragbahn (11) und einer geneigten Oberfläche zu verbessern, auf welcher die Matte (10, 12, 50) eingebaut ist.

6. Tonartige geosynthetische Matte nach einem der vorstehenden Ansprüche, **dadurch gekennzeichnet, dass** die Schicht (12) aus Bentonitton in der tonartigen Matte (12, 20, 50) in einer Menge von etwa 1,22 bis etwa 9,76 kg (0,25 Pfund bis etwa 2 Pfund) von Bentonitton pro Quadratmater (pro Quadratfuß) enthalten ist.

7. Tonartige geosynthetische Matte nach einem der vorstehenden Ansprüche 4 bis 6, **dadurch gekennzeichnet, dass** die zweite Schicht (14) aus Bentonitton in der tonartigen Matte (10, 20, 50) in einer Menge von etwa 1,22 bis etwa 9,76 kg (0,25 Pfund bis etwa 2 Pfund) an Bentonitton pro Quadratmeter (pro Quadratfuß) enthalten ist.

8. Tonartige geosynthetische Matte nach einem der vorstehenden Ansprüche, **dadurch gekennzeichnet, dass** die Zwischenschicht (21) eine geriffelte oder gewellte Struktur aufweist.

9. Tonartige flexible geosynthetische Matte nach Anspruch 1, mit einer Wasserdurchlässigkeit von weniger als 5 x 10⁻¹⁰ cm/Sek., bestehend aus folgenden Bestandteilen:
ein flexibles primäres Traggewebe (11);
eine flexible Zwischenschicht (13, 21) aus polymerem Bahnmaterial, welches an dem primären Traggewebe (11) befestigt ist;
eine Schicht (12) aus Bentonitton, welche auf der Oberseite der Zwischenschicht (13, 21) angeordnet ist, und
ein flexibles Deckgewebe (15), welches auf der Oberseite der Schicht (12) aus Bentonitton angeordnet ist.

10. Die verbesserte tonartige geosynthetische Matte nach Anspruch 4, mit einer Wasserdurchlässigkeit von weniger als 5 x 10⁻¹⁰ cm/Sek., **gekennzeichnet durch** folgende Bestandteile:
eine flexible primäre Tragbahn (11);
eine erste Schicht (12) aus Bentonitton, welcher auf der Oberseite der primären Tragbahn (11) angeordnet ist;
eine flexible Zwischenschicht (13, 21) aus polymerem Bahnmaterial, welche auf der Oberseite der ersten Schicht (12) aus Bentonitton angeordnet ist;
eine zweite Schicht (14) aus Bentonitton, die auf der Oberseite der Zwischenschicht (13, 21) angeordnet ist, und
eine flexible Deckbahn (15), die auf der Oberseite der Schicht (14) aus Bentonitton angeordnet ist.

11. Die verbesserte tonartige geosynthetische Matte nach Anspruch 1, **gekennzeichnet durch** folgende Bestandteile:
eine flexible primäre Tragbahn (11);
eine Schicht (12) aus Bentonitton, die auf der Oberseite der primären Tragbahn (11) angeordnet ist, und ein Gewebe (13, 21), welches mit einem wasserundurchlässigen Bahnmaterial aus Kunststoff ausgekleidet ist, das auf der Oberseite der Schicht (12) aus Bentonitton angeordnet ist, derart, dass das Kunststoffbahnmaterial in Berührung mit der Schicht (12) aus Bentonitton steht.

12. Die tonartige geosynthetische Matte nach Anspruch 9, **dadurch gekennzeichnet, dass** die Zwischenschicht (13, 21) aus polymerem Bahnmaterial weiterhin **dadurch gekennzeichnet ist, dass** es sich um ein wasserundurchlässiges Bahnmaterial handelt.

13. Tonartige geosynthetische Matte nach Anspruch 10, wobei die Zwischenschicht (13, 21) aus polymerem Bahnmaterial **dadurch gekennzeichnet ist, dass** es sich um ein wasserundurchlässiges Bahnmaterial handelt.

14. Verfahren zum Herstellen der tonartigen geosynthetischen Matte mit niedriger Durchlässigkeit nach Anspruch 1, **gekennzeichnet durch** folgende Verfahrensschritte:
(a) Bereitstellen einer flexiblen primären Tragbahn aus Gewebe;
(b) Ablegen einer Schicht (12) von Bentonitton auf der Oberseite der primären Tragbahn (11);
(c) Ablegen einer flexiblen Zwischenschicht (13, 21) aus polymerem Bahnmaterial auf der Oberseite der Schicht (12) aus Bentonitton;
(d) Ablegen einer flexiblen Deckbahn (15) aus Gewebe auf der Oberseite der flexiblen Zwischenschicht (13, 21) ;
(e) Befestigen der Deckbahn (15) an der primären Tragbahn (11), wobei die Schicht (12) aus Bentonitton und die Zwischenschicht (13, 21) zwischen diesen angeordnet ist.

15. Verfahren nach Anspruch 14, **dadurch gekennzeichnet, dass** zwischen den Verfahrensschritten (c) und (d) eine weitere Schicht (14) aus Bentonitton auf der Oberseite der flexiblen Zwischenschicht (13, 21) angeordnet wird.

## Revendications

1. Revêtement d'argile flexible géosynthétique (10) comprenant une couche porteuse primaire flexible (11) et une couche (12) d'argile bentonite disposée sur la couche porteuse primaire (11) dans lequel une couche intermédiaire flexible (13, 21) est disposée sur le dessus de la couche d'argile bentonite et une couche de couverture flexible (15) est disposée sur le dessus de la couche intermédiaire flexible (13, 21) **caractérisé en ce que** la couche intermédiaire flexible (13, 21) est fabriquée à partir du matériau en feuille de polymère de perméabilité faible.

2. Revêtement d'argile flexible géosynthétique selon la revendication 1, **caractérisé en ce que** l'adhésif est appliqué sur une surface supérieure de la couche porteuse primaire (11) pour assister en adhérant la couche (12, 14) d'argile bentonite contre la surface supérieure de la couche porteuse primaire (11) et l'adhésif est appliqué à une surface inférieure de la couche de couverture (15) pour assister en adhérant la couche intermédiaire flexible (13, 21) du matériau de feuille de polymère sur la feuille de couverture (15).

3. Revêtement d'argile flexible géosynthétique selon la revendication 2, **caractérisé en ce que** l'adhésif est appliqué sur les surfaces supérieures et inférieures de la couche intermédiaire flexible (13, 21) pour assister en adhérant la couche (12, 14) d'argile bentonite et la feuille de couverture (15) sur la couche intermédiaire (13, 21).

4. Revêtement d'argile flexible géosynthétique selon l'une des revendications précédentes, **caractérisé en ce qu'**une seconde couche (14) d'argile bentonite est disposée entre la couche intermédiaire flexible (13, 21) et la couche de couverture (15).

5. Revêtement d'argile flexible géosynthétique selon l'une des revendications précédentes, **caractérisé en ce qu'**une sous-surface de la feuille porteuse primaire (11) a une surface de friction élevée pour augmenter la liaison par friction entre la surface inférieure de la feuille porteuse primaire (11) et une surface inclinée sur laquelle le revêtement (10, 20, 50) est installé.

6. Revêtement d'argile flexible géosynthétique selon l'une des revendications précédentes, **caractérisé en ce que** la couche (12) d'argile bentonite est contenue dans le revêtement d'argile (10, 20, 50) dans une quantité comprise entre 1,22 et 9,76 kg (0,22 livres à 2 livres) d'argile de bentonite par mètre carré (par pied carré).

7. Revêtement d'argile flexible géosynthétique selon l'une des revendications 4 à 6, **caractérisé en ce que** la seconde couche (14) d'argile bentonite est contenue dans le revêtement d'argile (10, 20, 50) dans une quantité comprise entre 1,22 et 9,76 kg (0,25 livres à 2 livres) d'argile de bentonite par mètre carré (par pied carré).

8. Revêtement d'argile flexible géosynthétique selon l'une des revendications précédentes, **caractérisé en ce que** la couche intermédiaire (21) présente une structure nervurée ou ondulée.

9. Revêtement d'argile géosynthétique flexible amélioré de la revendication 1 ayant une perméabilité d'eau inférieure à 5 x 10⁻¹⁰ cm/sec comprenant :
une structure porteuse primaire flexible (11);
une couche intermédiaire flexible (13, 21) de matériau en feuille polymère fixée à la structure porteuse primaire flexible (11);
une couche (12) d'argile bentonite disposée sur le dessus de la couche intermédiaire (13, 21) et une structure flexible de couverture (15) disposée sur le dessus de la couche (12) d'argile bentonite.

10. Revêtement d'argile géosynthétique flexible amélioré ayant une perméabilité d'eau inférieure à 5 x 10⁻¹⁰ cm/sec comprenant :
une couche porteuse flexible primaire (11);
une première couche (12) d'argile bentonite disposée sur le dessus de couche porteuse primaire (11);
une couche intermédiaire flexible (13, 21) de matériau de feuille de polymère disposé sur le dessus de la première couche (12) d'argile bentonite
une seconde couche (14) d'argile bentonite disposée sur le dessus de la couche intermédiaire flexible (13, 21) et
une couche flexible couvrante (15) disposée sur le dessus de la couche (14) d'argile bentonite.

11. Revêtement d'argile géosynthétique flexible amélioré de la revendication 1 comprenant :
une feuille porteuse flexible primaire (11);
une couche (12) d'argile bentonite disposée sur le dessus de la couche porteuse primaire (11); et
une structure (13, 21) revêtue d'un matériau en feuille plastique imperméable à l'eau disposé sur le dessus de la couche (12) d'argile bentonite de sorte que le matériau en feuille plastique est en contact avec la couche (12) d'argile bentonite.

12. Revêtement d'argile synthétique de la revendication 9, dans lequel la couche intermédiaire flexible (13, 21) de matériau de feuille de polymère est en outre caractérisée comme étant une couche de matériau en feuille imperméable à l'eau.

13. Revêtement d'argile synthétique de la revendication 10, dans lequel la couche intermédiaire flexible (13, 21) de matériau de feuille de polymère est caractérisée comme étant une couche de matériau en feuille imperméable à l'eau.

14. Procédé de fabrication du revêtement d'argile géosynthétique à perméabilité basse, le procédé comprenant les étapes suivantes :
(a) fourniture d'une feuille porteuse primaire flexible de structure ;
(b) dépôt d'une couche (12) d'argile bentonite sur le dessus de la feuille porteuse primaire (11);
c) dépôt d'une couche flexible intermédiaire (13, 21) de matériau en feuille polymère sur le dessus de la couche (12) d'argile bentonite ;
(d) dépôt d'une feuille de couverture de structure textile (15) sur le dessus de la couche flexible intermédiaire (13, 21) ;
(e) fixation de la feuille couvrante (15) sur la feuille porteuse primaire (11) avec la couche (12) d'argile bentonite et une couche intermédiaire (13, 21 disposée entre.

15. Procédé selon la revendication 14, **caractérisé en ce qu'**entre les étapes de procédé (c) et (d), une autre couche (14) d'argile bentonite est déposée sur le dessus de la couche flexible intermédiaire (13, 21).
